# EUROPEAN PATENT APPLICATION

(11) **EP 3 608 360 A1**
(43) Date of publication of application: **12.02.2020**
(21) Application number: 18188053.5
(22) Date of filing: 08.08.2018
(51) Int. Cl.: C08K 5/32, C08K 5/3435

(54) **N-ALKOXY AMINE BASED STABILIZER COMBINATIONS**

(71) Applicant: Sabo S.p.A., 24040 Levate BG (IT)
(72) Inventor: Costantini, Enrico, 24129 Bergamo (IT); Fenili, Fabio, 24044 Dalmine, Bergamo (IT)
(74) Representative: Herzog IP Patentanwalts GmbH

(57) **Abstract**

The present invention relates to a composition at least comprising: A) a first N-alkoxy amine in a first amount; B) 3 wt.-% or more of a second N-alkoxy amine structurally different form the first N-alkoxy amine; and a balance to 100 of further constituents; wherein the amount of the first N-alkoxy amine is higher than the amount of the second N-alkoxy amine; wherein the molecular weight of the first N-alkoxy amine is less than the molecular weight of the second N-alkoxy amine; wherein the composition has a viscosity in the range from 15'000 to 70'000 mPa*s at 20 °C. The present invention relates further to a process of manufacturing an article, such as a foil, comprising said composition, an article comprising said composition and/or obtainable by said process, a mulch foil, a greenhouse and greenhouse foil comprising said article, an article comprising a coating comprising said composition, a process for producing plants wherein said article is employed and a use of said composition as a UV stabilizer and/or flame retardant.

## Description

The present invention relates to a composition at least comprising: A) a first N-alkoxy amine in a first amount; B) 3 wt.-% or more of a second N-alkoxy amine structurally different form the first N-alkoxy amine; and a balance to 100 of further constituents; wherein the amount of the first N-alkoxy amine is higher than the amount of the second N-alkoxy amine; wherein the molecular weight of the first N-alkoxy amine is less than the molecular weight of the second N-alkoxy amine; wherein the composition has a viscosity in the range from 15'000 to 70'000 mPa*s at 20 °C. The present invention relates further to a process of manufacturing an article, such as a foil, comprising said composition, an article comprising said composition and/or obtainable by said process, a mulch foil, a greenhouse and greenhouse foil comprising said article, an article comprising a coating comprising said composition, a process for producing plants wherein said article is employed and a use of said composition as a UV stabilizer and/or flame retardant.

Polyolefin resins are used in a variety of applications due to the ease of use in the manufacturing of a variety of extruded and moulded articles. Mulch- and greenhouse foils or films are exemplary articles that may be prepared from polyolefin resins, which are widely used in the agricultural business. However, foils prepared from polyolefin resins frequently suffer from loss of the tensile strength and general stability due to exposure to UV light and exposure to acidic conditions, e.g. due to contact with pesticides and acid rain. This is particularly relevant for outdoor applications where the foils may be exposed to prolonged sunlight, acid rain, and pesticides over a period of several months. As the mechanical properties of the foils deteriorate, the failure rate of the foils increases, thereby decreasing the protective properties of the foils and reducing the overall usefulness of the foils.

Thus, there exists a need for the development of a polyolefin resin, particularly a polypropylene resin, and articles prepared therefrom, having improved UV stability and increased lifetimes. These features are usually produced by adding stabilizers to the polyolefin resin.

One group of these stabilizers are sterically hindered amines. Sterically hindered amines were of considerable industrial interest in the past, but despite all efforts, it is still an object to provide improved stabilizer compositions for polyolefin resins to extend service time and life time of articles made therefrom, e.g. foils and films, in particular in outdoor use as in the agricultural business.

In general terms, it is an object of the invention to at least partly overcome at least one of the disadvantages that are known from the prior art.

It is a further object of the invention to provide a composition which awards as an additive package to a matrix polymer an extended life time, in particular while being exposed to at least one of light, UV light, heat, moisture, pesticides, rain, acid rain, and combinations thereof.

It is a further object of the invention to provide an article, such as mulch film and greenhouse foil, which has an extended life time, in particular while being exposed to at least one of light, UV light, heat, moisture, pesticides, rain, acid rain, and combinations thereof.

It is a further object of the invention to provide a composition which awards as an additive package to a matrix polymer an extended life time and prolonged fire resistance.

It is a further object of the invention to provide an article which exhibits an extended life time and prolonged fire resistance.

It is a further object of the invention to provide a process with which a matrix polymer can be processed to its final shape without deterioration of the processed matrix polymer.

It is a further object of the invention to provide compositions of additives with which a matrix polymer can be processed to its final shape without deterioration of the processed matrix polymer.

It is a further object of the invention to provide compositions of additives and processes of manufacture, by which articles of a matrix polymer and the composition are transparent in the UV/VIS wavelength band.

It is a further object of the invention to provide a foil as transparent as possible in order to avoid absorption of visible and/or UV light by the foil. This is an object in order to further plant growth as much as possible.

It is a further object of the invention to provide greenhouse foil with which plants and seedlings can be grown faster.

It is a further object of the invention to provide mulch foil with which lasts longer.

A contribution to the solution of at least one of the above objects is provided by the subject-matter of the category-forming embodiments. The dependent sub-embodiments of the category-forming embodiments represent preferred embodiments of the invention, the subject-matter of which also makes a contribution to solving at least one of the objects mentioned above.

### PREFERRED EMBODIMENTS

|1| A composition at least comprising:
   A) a first N-alkoxy amine in a first amount;
   B) 3 wt.-% or more of a second N-alkoxy amine structurally different form the first N-alkoxy amine; and
      a balance to 100 of further constituents;
      wherein the amount of the first N-alkoxy amine is higher than the amount of the second N-alkoxy amine; wh
      erein the molecular weight of the first N-alkoxy amine is less than the molecular weight of the second N-alkoxy amine;
      wherein the composition has a viscosity in the range from 15'000 to 70'000 mPa*s at 20 °C; and
      wherein the molecular weight of the first N-alkoxy amine is in the range from 500 to 1600 g/mol; and
      wherein the molecular weight of the second N-alkoxy amine is in the range from 1000 to 3000 g/mol.
|2| The composition according to the embodiment 1, wherein the second N-alkoxy amine is a polymer which comprises a first and a further repeating unit, wherein the first repeating unit is obtainable from an alkanediol.
|3| The composition of embodiment |2|, wherein the further repeating unit is obtainable from a N,N'-bis(2,2,6,6-tetramethyl-4-piperidyl)ester of a dicarboxylic acid.
|4| The composition according to any one of embodiments |2| to |3|, wherein the polymer comprises from 2 to 5 of the further repeating units.
|5| The composition according to any one of the preceding embodiments, wherein the composition has a piperidyl content in the range of from 30 to 60 wt.-% based on the total weight of the composition.
|6| The composition according to any one of the preceding embodiments,
   wherein the composition has a viscosity in the range from 15'000 to 30'000 mPa*s at 20 °C; and
   wherein the molecular weight of the first N-alkoxy amine is in the range from 500 to 900 g/mol; and
   wherein the molecular weight of the second N-alkoxy amine is in the range from 1000 to 1800 g/mol.
|7| The composition according to any one of embodiments |1| to |5|,
   wherein the composition has a viscosity in the range from 50'000 to 70'000 mPa*s at 20 °C; and
   wherein the molecular weight of the first N-alkoxy amine is in the range from 1200 to 1700 g/mol; and
   wherein the molecular weight of the second N-alkoxy amine is in the range from 1800 to 2500 g/mol.
|8| The composition according to any one of the preceding embodiments, wherein the composition comprises
   C) 0.5 wt.-% or more of a further N-alkoxy amine structurally different from the first and the second wherein the molecular weight of the further N-alkoxy amine is higher than the molecular weight of the second N-alkoxy amine, the wt.-%. with respect to the total weight of the composition.
|9| The composition according to embodiment |8|, wherein the molecular weight of the further N-alkoxy amine is in the range from 1500 to 4000 g/mol.
|10| The composition according to any one of embodiments |8| or |9|, wherein the further N-alkoxy amine is a polymer of an alkanediol and a N,N'-bis[1-(alkoxy)-2,2,6,6-tetramethyl-4-piperidyl] ester of a dicarboxylic acid.
|11| The composition according to any one of the preceding embodiments, wherein the composition comprises at least one further constituent selected from the group consisting of a phosphite, a phosponite, a HALS, and/or a phenolic, or a combination of two or more thereof.
|12| The composition according to embodiment |11|, wherein the at least one further constituent is selected from the group consisting of benzoic acid, a benzoate, such as Hexadecyl-3,5-bistert-butyl-4-hydroxybenzoate or, 2,4-di-tert-butylphenyl 3,5-di-tert-butyl-4-hydroxybenzoate, or a combination of two or more thereof.
|13| A process of manufacturing an article comprising a composition according to any one of the preceding embodiments, wherein the process comprises at least these steps:
   (I) Providing a polymer;
   (II) Adding the composition;
   (III) Processing the polymer and the composition.
|14| An article comprising at least a polymer and a composition according to any one of the embodiments |1| to |12|, or an article obtainable by the process of embodiment |13|.
|15| The article of embodiment |14|, wherein the article comprises at least a polymer selected from the group consisting of a polyolefin, a thermoplastic, a thermoplastic olefin compound, or a combination of two or more polymers in the same or in different groups thereof.
|16| The article of any one of embodiments |14| or |15|, wherein the article is a foil or a film.
|17| A greenhouse comprising at least one article according to anyone of embodiments |14| to |16|.
|18| A process for producing plants comprising at least the following steps:
   i) Planting seeds or seedlings in a culture medium;
   ii) At least partially covering the planted seeds or seedlings with the article of any one of embodiments |14| to |16|.
|19| A use of a composition according to anyone of embodiments |1| to |12| as a UV stabilizer and/or as a flame retardant for articles comprising at least a polymer.
|20| An article comprising at least a coating which coating comprises a composition according to any one of the embodiments |1| to |12|.

### DEFINITIONS

The term "in the range from x to y" is understood in the present context to comprise all values between the number x and y, and also the limit forming numbers x and y. For example, the term "in the range from 2 to 13" comprises the numbers 2, 13 and all in between.

A "Polymer" is a material which is built by two or more repeating units. For example, a polymer can have 2, 3, 4, 5, 6, 7, 8, 9, 10 repeating units. Moreover, a polymer can have about 20, 50, 100 or 1000 repeating units, or even more. In a variation, a polymer can have two or more different repeating units. Then, two different educts, each comprising one of the repeating units or a chemical structure that may form the repeating unit during reaction, are employed at the same time, or one after another, to obtain a polymer which comprises both repeating units. Depending on the protocol of preparation and on the individual educts, the polymers obtainable may have a statistical occurrence of each repeating unit in their structure, or a rather defined arrangement. With regard to this, polymers can be block-copolymers, alternating polymers or polymers with statistical occurrence of the repeat units. This is well known to the skilled person in the art of polymers.

A repeating unit is a fragment of chemical structure which occurs more than once in a polymer. The repeating units are formed during the polymerization reaction. In the present context, a radical polymerization reaction with a solvent is preferred. This means that a first repeating unit is formed from an educt molecule, and a second repeating unit is formed from incorporating solvent molecules thus combining both structures. A small molecule such as water, ammonia etc. is sometimes produced as a side product.

Values of molecular weight describes molecular weight. The molecular weight is determined by gel permeation chromatography (GPC) as described in the test methods. When defining polymers or polymeric materials, the molecular weight in the present context refers to the averaged weight molecular weight, as determined by GPC according to test method described herein.

The term "transparent" means in the present context that at least around 60 % of incident light pass through a sample of a thickness of 5 µm and at a reference wavelength of 450 nm. Preferably, more than 70 %, or more than 75%, or more than 80 % of incident light pass through the sample.

Chemical compounds can be followed by an expression in brackets. In this event, the bracket mention a trademarks for illustrative purposes, under which the chemical compound can be purchased.

### DETAILED DESCRIPTION OF THE INVENTION

The invention is now described in further detail. This includes a description of optional embodiments which may contribute further to the invention.

A first aspect of the invention is a composition at least comprising:
A) a first N-alkoxy amine in a first amount;
B) 3 wt.-% or more of a second N-alkoxy amine structurally different form the first N-alkoxy amine; and
   a balance to 100 of further constituents;
   wherein the amount of the first N-alkoxy amine is higher than the amount of the second N-alkoxy amine;
   wherein the molecular weight of the first N-alkoxy amine is less than the molecular weight of the second N-alkoxy amine;
   wherein the composition has a viscosity in the range from 15'000 to 70'000 mPa*s at 20 °C; for example, in the range from 15'000 to 30'000 mPa*s at 20 °C, or from 18'000 to 22'000 mPa*s at 20 °C; or for example from 50'000 to 70'000 mPa*s at 20 °C, or from 57'000 to 67'000 mPa*s at 20 °C; and
   wherein the molecular weight of the first N-alkoxy amine is in the range from 500 to 1600 g/mol; for example from 600 to 900 g/mol; and
   wherein the molecular weight of the second N-alkoxy amine is in the range from 1000 to 3000 g/mol; for example from 1000 to 1600 g/mol.

The molecular weight values are determined and calculated from gel permeation chromatography according to the method described in the section test method. The viscosity is determined according to the method described in the section test method.

The amount of the second N-alkoxy amine is, based on the total weight of the composition, 3 wt.-% or more, for example 5 wt.-% or more, or 10 wt.-% or more. Often, the second N-alkoxy amine does not exceed an amount of 49 wt.-%. For example, the amount of the second N-alkoxy amine is, based on the total weight of the composition, in the range from 3 to 45 wt.-%, or from 5 to 40 wt.-%, or from 5 to 20 wt.-%, or from 10 to 40 wt.-%, or from 20 to 40 wt.-%, or from 30 to 40 wt.%, or from 10 to 45 wt.-%, or from 20 to 45 wt.-%, or from 30 to 45 wt.-%; or from 35 to 45 wt.-%.

In all events, the amount of the first N-alkoxy amine is higher than the amount of the second N-alkoxy amine. For example, the amount of the first N-alkoxy amine is, based on the total weight of the composition, from 2 - 50 wt.% higher, or from 2 - 40 wt.% higher, or from 2 - 30 wt.% higher, or from 2 - 20 wt.% higher, or from 2 - 10 wt.% higher, or from 5 to 25 % higher, or from 10 to 25 % higher than the amount of the second N-alkoxy amine.

In all events, a balance of 100 wt.-% with respect to the total amount of the composition is maintained. The remainder besides of the amount of the first N-alkoxy amine and the second N-alkoxy amine can be constituted by, e.g., one or more further N-alkoxy amines, of which each is structurally different from the first and the second N-alkoxy amine; the remainder can be also constituted by other stabilizers, flame retardants, viscosity modifiers, fillers, surfactants, antistatic, antifog, processing aids and solvents.

In an embodiment of the invention, the composition of the first aspect is a liquid In another embodiment of the invention, the composition has a solidification point, as determined by DSC, of less than 0°C, for example less than -10°C, or less than -20 °C, or less than -30 °C. Often, the solidification point remains higher than -50 °C.

In another embodiment of the invention, the composition has a color according to the Gardner scale in the range from 3 to 8.

In another embodiment of the invention, the composition has a viscosity in the range of 100 to 2000 mPa*s at a temperature in the range from 40 to 80 °C.

In a first embodiment of the invention, the second N-alkoxy amine is a polymer which comprises a first and a further repeating unit, wherein the first repeating unit is obtainable from an alkanediol.

Any Alkanediol known to a skilled person can be used to prepare the polymer which is the second N-alkoxy amine. Examples of suited alkanediols can be selected from the group consisting of alkanediols having from 2 to 20 carbon atoms, for example from 4 to 16 carbon atoms, or from 8 to 14 carbon atoms. α,ω-alkanediols are preferred. Examples of suited alkanediols are ethane-1,2-diol, propane-1,2-diol, propane-1,3-diol, butane-1,2-diol, butane-1,3-diol, butane-1,4-diol, pentane-1,5-diol, pentane-1,6-diol, hexane-1,6-diol, heptane-1,7-diol, octane-1,8-diol, nonane-1,9-diol, decane-1,10-diol, decane-1,9-diol, decane-2,8-diol, undecane-1,11-diol, dodecane-1,12-diol, with preference to decane-1,10-diol and isodecanediol. Furthermore, combinations of two or more alkanediols can be employed to prepare the second N-alkoxy amine.

The further repeating unit contributing to the second N-alkoxy amine can be chemical compound that a skilled person is aware of and might consider useful. In a further embodiment of the invention, a suited further repeating unit is a N,N'-bis(2,2,6,6-tetramethyl-4-piperidyl)ester of a dicarboxylic acid, or a combination of two or more thereof. The dicarboxylic acid component can have by preference a number of carbon atoms - carboxylic groups exempted - in the range from 2 to 12, or from 2 to 8, for example butanoic acid or sebaceic acid. The dicarboxylic ester can be linear or branched. Further, the further repeating unit can be a combination of two or more of the aforementioned esters with a variation in the dicarboxylic ester.

In a further embodiment of the invention, the second N-alkoxy amine can have 2, 3, 4 or 5 of the further repeating units in the polymer. Further, the second N-alkoxy amine can be composed of two or more compounds having 2, 3, 4 or 5 repeating units, wherein the members of said composition have different values for the number of repeating units.

In a further embodiment of the invention, the composition has a piperidyl content in the range of from 30 to 60 wt.-%, or from 25 to 50 wt.%, each based on the total weight of the composition.

In a further embodiment of the invention, the composition has a viscosity in the range from 15'000 to 30'000 mPa*s at 20 °C; and the molecular weight of the first N-alkoxy amine is in the range from 500 to 900 g/mol; and the molecular weight of the second N-alkoxy amine is in the range from 1000 to 1800 g/mol.

In a further embodiment of the invention, the composition has a viscosity in the range from 50'000 to 70'000 mPa*s at 20 °C; and the molecular weight of the first N-alkoxy amine is in the range from 1200 to 1700 g/mol; and the molecular weight of the second N-alkoxy amine is in the range from 1800 to 2500 g/mol.

In a further embodiment of the invention, the composition comprises C) 0.5 wt.-% or more, for example from 0.5 wt.%, for example from 0.5 to 5, or from 5 to 25 et.-%, or from 8 to 20 wt.%, of a further N-alkoxy amine structurally different from the first and the second wherein the molecular weight of the further N-alkoxy amine is higher than the molecular weight of the second N-alkoxy amine. Often, the amount of further N-alkoxy amine does not exceed 30 wt.%, based on the total weight of the composition.

It was found that a combination of the first N-alkoxy amine and the second N-alkoxy amine with a Hindered Amine Light Stabilizer (HALS) or alternatively with a Benzoate derivate enhances the stabilizing effects of the composition of the invention in a synergistic manner.

The second N-alkoxy amine is often present in less than 10 wt.%, based on the total weight of the composition if 0.5 wt.% or more of a further N-alkoxy amine are also present.

In a further embodiment of the invention, the molecular weight of the further N-alkoxy amine is in the range from 1500 to 4000 g/mol, for example in the range from 1800 to 3000 g/mol. As before, the molecular weight is calculated from GPC data as described in the section "test methods".

In a further embodiment of the invention, the further N-alkoxy amine is a polymer of an alkanediol and a N,N'-bis[1-(alkoxy)-2,2,6,6-tetramethyl-4-piperidyl] ester of a dicarboxylic acid.

The alkoxy fragment can be either linear or branched, for example an alkoxy or an isoalkoxy group. The fragment based on the dicarboxylic acid is selected from the same choice as described with the first aspect of the invention.

In a further embodiment of the invention, the composition comprises at least one further constituent which is selected from the group consisting of a phosphite, a phosphonite, a HALS, and/or a phenolic, or a combination of two or more thereof. The amount of further constituent is in the range of about 1000 ppm for phosphites and phosphonites and about 500 ppm for phenolic compounds, the ppm always with respect to the total weight of the composition. These constituents are usually added to stabilize the composition during processing. E.g. when a polymeric material comprising the composition of the first aspect including one or more further constituents is processed to manufacture a sheet or a foil etc. Then, it was found that the presence of these constituents in the processed material enhances the thermal stability, the overall UV stability, and the stability to shear forces of the composition of the first aspect.

In a further embodiment of the invention, the at least one further constituent is selected from the group consisting of benzoic acid, a benzoate, such as Hexadecyl-3,5-bistert-butyl-4-hydroxybenzoate or, 2,4-di-tert-butylphenyl 3,5-di-tert-butyl-4-hydroxybenzoate. Furthermore, combinations of two or more thereof can be used.

It was found that a combination of one or more N-alkoxy amines as previously described with a benzoic acid derivate and/or with a phosphoric compound like phosphonite/phosphite strongly enhances the oxidation stability during polymer processing. Moreover, the oxidation stability of the processed polymer is enhanced when being exposed to UV light or sun light.

In an example, which constitutes also an embodiment of the first aspect of the invention, the first N-alkoxy amino is the butanedioic ester of 1,4-bis[1-isodecyloxy)-2,2,6,6-tetramethyl-4-piperinyl], CAS no. 1883807-47-3:

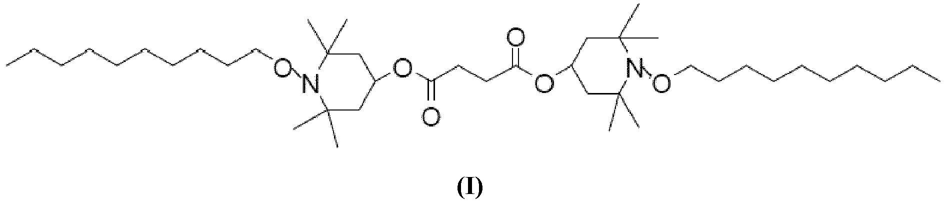

The second N-alkoxy amine can be obtained by radical polymerization of this first N-alkoxy amine with decane, CAS no. 124-18-5, in the presence of t-Butyl hydroperoxide, CAS no. 75-91-2 as radical generator:

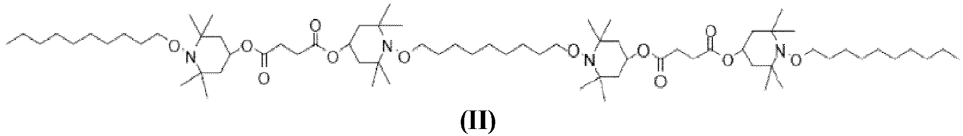

An optional further N-alkoxy amine could be: 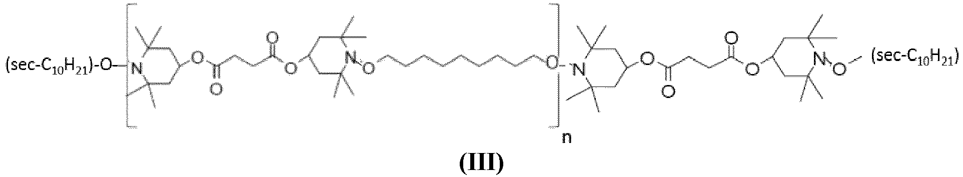 with n=2.

A second aspect of the invention is a process of manufacturing a composition according to the first aspect or any of its embodiments, wherein the process comprises at least these steps:
a. providing a first amount of a first N-alkoxy amine and a second amount of a second N-alkoxy amine, and optionally further constituents to the composition; wherein the first amount is higher than the second amount; and
b. mixing the constituents provided in step a..

Step a. providing can be performed according to any way known to a skilled person and considered suited in the present method. Step b. mixing can be performed by any means known to a skilled person and considered suited by him. Examples of mixing are stirring and bubbling with a gas, e.g. bubbling air, using a mechanical mixer, dosing the components during polymers extrusion via loss and weight feeders, or liquid dosing systems feeding the extruder.

According to another facet of the invention, the composition can be produced from a single batch via some steps. Accordingly, synthesis could start with two molar equivalents of 2,2,6,6,-Tetramethyl-4-piperidinol (CAS no. 2403-88-5) and 1 molar equivalent of 1,2 dimethyl ester of butanoic diacid to obtain intermediate product Butanedioic acid, 1,4-bis(2,2,6,6-tetramethyl-4-piperidinyl) ester CAS no. 62782-03-0 by a transesterification reaction. The intermediate can be alkoxylated by radical reaction using t-butyl hydroperoxide as initiator in excess decane (solvent). Similars can be obtained by using another solvent, e.g. isooctane, n-decane, isoalkane or n-alkane.

A third aspect of the invention is a process of manufacturing an article comprising a composition according to any one of the preceding aspects or embodiments thereto, wherein the process comprises at least these steps:
(I) Providing a matrix polymer;
(II) Adding the composition;
(III) Processing the matrix polymer and the composition.

Step (I) providing of a matrix polymer can be performed according to any way known to a skilled person and considered suited in the present method.

In a preferred embodiment, the ratio of the composition to the matrix polymer is in the range from 0.05 - 50 wt.%, for example from 0.05 to 2 wt.% (e.g.: via direct dosing of the composition into a matrix polymer), or from 5 to 25 wt.% (e.g.: via masterbatch production that can be further diluted in a matrix polymer), the wt.-% always based on sum of the total weights of the matrix polymer and the composition.

Step (II) adding the composition can be performed according to any way known to a skilled person and considered suited. For example, the composition can be added as droplets from a liquid dosing system. Such a liquid dosing system pumps and doses a liquid into a main hopper of an extruder which liquid is then blended with the matrix polymer via a classical extrusion process using extruders at the state of the art (single or double screw, co-rotating or counterrotating, etc.). Others optional ingredients can be added via loss and weight feeders, or alternatively, the composition can be added to the polymer matrix via the so-called masterbatch route. Masterbatch route means that a concentrate of the composition previously produced and mixed into a first matrix polymer. About from 5 to about 25 wt.% of the composition are mixed into the first matrix polymer which constitutes a masterbatch. Then the masterbatch is diluted with a second matrix polymer to obtain a final composition from 0.05 to 2 wt.% of the composition into the resulting matrix polymer. Dosing can be performed using a loss and weight feeder which feeds into the main hopper of the extruder or by feeding via side feeder extruder.

Step (III) processing the matrix polymer and the composition can imply any means known to a skilled person and considered suited for processing of matrix polymers. Variants of processing include homogenizing, extruding, blowing, casting and combinations of these variants to form a foil or a sheet of the matrix polymer. Further examples of such processing methods include Injection molding, Blow molding, Roto-molding, thermo-forming, cast or blown film processing, stretching tapes, mono-filaments, multi-filaments, films orientation like BOPP, BoPET, or mono-oriented films, fibers and nets productions or any other processing of plastics known at the state of the art.

A fourth aspect of the invention is an article comprising at least a matrix polymer and a composition according to any one of the embodiments of the first aspect or one of its embodiments, or an article obtainable by the process of the third aspect or one of its embodiments.

In an embodiment to the third and the fourth aspect, the at least one matrix polymer can be selected from the group consisting of a polyolefin, a thermoplastic, a thermoplastic olefin compound, or a combination of two or more matrix polymers being in the same or in different groups of the above. Preferred olefins are selected from polymers of monoolefins and polymers of diolefins; for example polypropylene, polyisobutylene, polybut-1-ene, poly-4-methylpent-1-ene, polyisoprene or polybutadiene, as well as polymers of cycloolefins, for instance of cyclopentene or norbornene, polyethylene (which optimally can be crosslinked), for example high density polyethylene (HDPE), low density polyethylene (LDPE), linear low density polyethylene (LLDPE), branched low density polyethylene (BLDPE). The polyolefins are usually produced employing catalysts. Metallocenes, Ziegler-Natta catalysts, and Ziegler catalysts are preferred.

Another preferred matrix polymer of the invention is a polyethylene-vinyl acetate (EVA) with Vinil Acetate (VA) comonomer, wherein the comonomer content is in the range from 3% to 25%, based on the total amount of matrix polymer.

A further preferred group of matrix polymer of the invention is polyamides (in the following referred to as: "PA"), such as: PA6, PA66, PA46, PA11 and PA12.

A further preferred group of matrix polymer of the invention is polyesters.

A further preferred group of matrix polymer of the invention is styrenic polymer, such as PS, ABS, ASA, SAB, i-PS, E-PS and PVC.

Further preferred as matrix polymers is a wide range of materials, such as POM; PUR, TPU, TPE, UPES, PMMA, PPE, Epoxy resins, Acrylic resins, WPC and rubbers. Preferred rubbers are SBS, SEBS, BR, IR, SBR, NBR, EPR, EPDM, X-SBR, X-TPE and so forth.

Moreover, the composition of the invention can be deployed in inks, sealing, adhesives and coating polymers.

The abbreviations of polymers and matrix polymers throughout this patent are mentioned in accordance with DIN EN ISO 1043-1:2016, DIN ISO 1629:2015, DIN EN ISO 18064:2015 and DIN ISO 2076:2014.

In another embodiment of the third and fourth aspect, the article is a foil or a film. In the present context, a foil is any kind of planar article with a thickness of 2 mm or less. A film in the present context is any kind of foil with a thickness in the range from 10 to 250 µm. a sheetlike article is defined as an article which extends in three perpendicular directions, wherein the thickness refers to the direction, in which the article extends least.

A sixth aspect of the invention is a greenhouse comprising at least an article according to the third or fourth aspect, or any of its embodiments. A greenhouse is an article in which seedlings and plants can be grown. A greenhouse is often covered by a foil or a film to protect the interior of the greenhouse from some environmental aspects such as rain, birds, heat, cold and the like. The foil or film can be a substitute of a fixed mounted glass ceiling.

A seventh aspect of the invention is a process for producing plants comprising at least the following steps:
i) Planting seeds or seedlings in a culture medium;
ii) At least partially covering the planted seeds or seedlings with the article described before.

A culture medium is a material which is suited to promote growing of seeds, seedlings and plants in general. Any culture medium can be employed which is known to the skilled person and considered suited for the purpose of growing seeds or seedlings, e.g. soil.

An eighth aspect of the invention is a use of a composition according to the first aspect or one of its embodiments as a UV stabilizer and/or as a flame retardant for articles comprising at least a matrix polymer.

A UV stabilizer is a chemical substance or composition of substances that delays a degradation of a polymer which is exposed to UV light, e.g. from sun light. Accordingly, a UV stabilizer increases the lifetime of a polymer which is exposed to sun light or UV light from another source.

A flame retardant is a chemical substance or composition that delays or even inhibits an outbreak or a propagation of fire on a material. Accordingly, a polymer comprising a flame retardant will ignite, burn or smoke with delay compared with a polymer having no such additive.

An ninth aspect of the invention is an article comprising at least a coating, wherein the coating comprises a composition according to the first aspect or one of its embodiments. In this aspect, the composition according to the first aspect or its embodiments is not comprised in the article, but mainly, or completely comprised in a layer on the article. Certain amounts of the composition or at least some of its constituents can be present in the article with time, even if they were not initially, due to internal migration of chemical constituents within a dense article. In a common embodiment, the composition mentioned in this invention is mixed with a coating like a varnish, a paint, an ink, a glue, an adhesive or a sealant and then be applied on the article.

### TEST METHODS

Unless stated to the different, all solvents were used in analytical grade (p.a.).

### a. Gel permeation chromatography (GPC)

GPC measurements were performed on a Agilent 1200 model by Agilent Technologies using an RI detector or a Multiple Wavelength Detector which both were run at 30°C. The columns were Shodex Asahipak GF310 HQ, length 300mm x 7.6 mm (inner diameter) available from Showa Denko Europe GmbH, Munich, Germany. THF comprising 0.02 M Diethanol amine (DEA) (or 2.1028 g of DEA / 1 litre THF) was used as mobile phase. The flux was set to 0.8 ml/min. The injection volume per sample/shot was 5 µl. The concentration of the sample was 5wt.%, in THF.

A primary column calibration was performed prior to sample measurements. This calibration was performed by using 5 different mono-disperse standards of polystyrene with defined Mₙ and M_{w} (available and certified by Sigma-Aldrich Chemie GmbH, Munich, Germany) were used, labelled 500, 800, 1000, 2000 and 3000 (product Ids 81401, 327824, 81402, 81403 and 81404). 10 mg of each standard was transferred into a vial, one drop of toluene and 1 ml of THF, was added. Each sample was injected at least twice, or until time differences in retention time for a sample remained reproducible within 0.2%. The GPC software used the peaks to determine the retention times and to create the calibration curve automatically.

Experimental samples were processed this way: 10 mg of a sample were transferred into a 10 ml volumetric flask along with 4 drops of toluene. THF was added up to the mark of 10 ml. After stirring, the sample was filtered through a 0.45µ Teflon membrane (Minisart® SRP4 Syringe Filter 17820, 0.45 µm hydrophobic PTFE, available from Sartorius AG, Goettingen, Germany) prior to injecting. Each probe was measured at least twice, or until Mₙ values determined by GPC deviated less than 0.8% max.

### b. Viscosity

Viscosity was determined using a AMETEK Brookfield Viscometer DVE Model which is equipped with a thermometer of a precision of +/- 0.5 °C. A beaker of 60 mm in diameter was filled with a liquid sample to a height of 100 mm and one of impellers LV2, LV3 or LV4 was mounted to the viscometer. The impeller was immersed up to the mark on the impeller's shaft and then centered to be in the middle of the beaker. Finally, the instrument was checked to be levelled with the aid of the built-in bull's eye level of the instrument. The rotational speed was set as specified for the cone. Then the engine was started. After waiting for at least 30 seconds to ensure constant conditions in the beaker, the clutch lever was pushed and the viscosity value appeared on the display of the instrument.

### c. Weathering test

Weathering tests were conducted according to the specifications of ISO 4892-2:2013, method A cycle no. 1 using a model WOM Ci 3000 Weather-Ometer from ATLAS Material Testing Technology GmbH equipped with a water-cooled xenon lamp (6500W), borosilicate S type filters (internal and external). The irradiation was 0.51W/m² at a wavelength of 340 nm, and 60 W/m² within the wavelength band of 300 - 400 nm. The black standard temperature was 65±3°C at a chamber temperature of 38±3°C. Humidity was 50±5 % relh. Cycle time was 102 min. of light in dry air followed by 18 min. of light with water spray.

Samples were introduced in the weather-Ometer (also referred to as: "WOM") and periodically checked for evidence of oxidation induced by light by visual assessment of micro-crazing appearing on the surface of the sample (usually associated with superficial polymer oxidation). The micro-crazing is also known as "chalking".

### d. Solidification point (DSC)

Solidification points of the composition of the invention were detected according to ASTM D3418-15 via using a PerkinElmer DSC 4000 Model, under N₂.

A sample of ca. 5 mg was introduced into the pan specimen holder, the sample was weighed with an accuracy of ±1 µg with an appropriate laboratory precision balance. Another specimen holder remained empty serving as a reference for the differential measurement. The furnace was hermetically closed in order to isolate the test environment from the outside. The thermal program was composed of a linear temperature ramp: from 25°C to 200°C at 10°C/min ± 0.1°C /min, under a continuous and uniform flow of N₂ inert atmosphere inside the furnace. Any variation in temperature and heat flux between the two specimen holders (material and the reference) was automatically recorded by DSC software.

### e. Pesticide/S fumigation simulation

To simulate pesticides acid attack on the plastic stabilizers the samples introduced into WOM Ci 3000 every 360 hours (15 days) were taken out of the WOM and immersed in a solution 0.2 M of H₂SO₃ for 24 hours. Sulfur dioxide is generated in water from sulphurous acid solution according to the equation: H2SO₃ ⇄ SO₂ + H₂O.

### f. Carbonyl index

The carbonyl index can serve as a measure of degradation caused by thermooxidation and/or photooxidation. IR absorbance at 1720 cm⁻¹ is a characteristic band and recorded at intervals. An increase in the IR absorbance is correlated with ageing due to weathering.

Carbonyl index is calculated according to the ratio of A1720(t)/A1720(0), in which A1720(t) and A1720(0) are the absorbance values at 1720 cm⁻¹ after time (t) and before degradation at time=0 (0), see article Polymer Degradation and Stability 86 (2004) pages 493-497, Gabriela Botelho and others.

### g. Tensile strength and Elongation at Break

Tensile strength and elongation at break were measured using a Instron Dynamometer 3384 model, according to ISO 527-3:1995 method for Films or ISO 527-2:2012 for thick items with thickness > 1mm.

### h. Fire behaviour

This characteristic was determined and classified according to DIN 4102-1:1998 using a camber with a burner model KBK from TAURUS Instruments AG. The specimen was suspended vertically on a burning chamber. Then, a 20 mm high flame is applied for 15 seconds to both the test surface and an edge. Reference lines are marked on the specimen (150 mm, the gage mark from the top) which achieves B2 classification if the tip of the flame does not reach the reference marks within 20 seconds on any sample. 5 samples are tested with filter paper being placed below each to determine the production of flaming droplets.

In evaluating the test, smoke gas temperature and the mean residual length of the sample are taken into account (residual length is the part of the specimen which has escaped burning). The dimension of the specimen were 230 mm x 90 mm x 0.5 mm, compression molded polypropylene.

In order to be classified as B1, the tested specimen must show:
1. A mean residual length of not less than 150 mm, (the gage mark, within 20s after flame application), with no specimen being burned away completely; and
2. A mean smoke gas temperature of less than 200°C.
3. the requirement for residual length for each sample is met even if there is after-flame, afterglow or smoldering

In order to be classified as B2, the tested specimen must show:
1. A mean residual length of not less than 150 mm, (the gage mark) within 20s after flame application. (DIN 4102-1:1998, sub-clause 6.2.5)

B2 is a pre-requisite for B1 classification. For B1, the sample needs to meet also points 2 & 3, as mentioned above.

### i. Oxygen index

This test according to ASTM D2863-17a shows which oxygen concentration is needed for a specific material to burn continuously. Specimen pre-treatment storage for >88 hours at 23 °C, 50 % rel.h. Specimen dimensions: 100 mm x 10 mm x 4 mm, injection molded polypropylene. Testing apparatus LOI Oxygen Index Analyzer by TAURUS Instruments AG.

A test specimen is supported vertically in a mixture of oxygen and nitrogen flowing upwards through a transparent chimney. The upper end of the specimen is ignited and the subsequent burning behavior of the specimen is observed to compare the period for which burning continues, or the length of the specimen burnt, with specified limits for such burning. By testing a series of specimens in different oxygen concentrations (rest nitrogen), the minimum oxygen concentration is estimated.

### j. Flammability

Flammability was tested according to the standard UL 94. After pelletization and drying, the pellets were injection molded into test specimens intended to be used for the flammability test in accordance to the Underwriters Laboratories Standards, in particular to the test UL 94 for Vertical Burning Test. The tester model was GOV-94-X from SGS Govmark, Inc. The test prescribes:
- conditioning of 5 specimens (each formulation and thickness) at 23 °C and 50% of relative humidity for 2 days; specimen dimensions 125 mm x 13 mm x 1 mm
- positioning of each individual conditioned specimen in vertical position at about 20 cm from a below cotton flock;
- two applications of flame for each specimen (the second application starts as soon as the specimen ignited by the first application extinguishes).

The UL 94 results have been reported in accordance with the following meaning also prescribed by the standard:
- V-0: when the 5 tested specimens have got total afterburning time no longer than 50 sec, less than 10 sec each application of the flame and for after-flame time for each individual specimen, no burning drops are allowed.
- V-1: when the 5 tested specimens have got total burning time less than 250 sec, less than 30 sec each application of the flame and for after-flame time for each individual specimen, no flaming drops are allowed.
- V-2: when the 5 tested specimens have got total afterburning time of less than 250 sec, less than 30 sec each application of the flame and for after-flame time for each individual specimen, flaming drops are allowed. Cotton ignited by flaming particles or drops.
- When the test results do not meet the above V0, V1 and V2 criteria, "Fail" has been marked in the attached tables.

### k. Gloss measurement

A gloss-meter model Novo Gloss Trigloss Gloss Meter 20/60/85° by Rhopoint Instruments Limited was utilized to measure gloss superficial property at angle 20° according to ASTM D523 - 14 methodology.

### l. Color measurement

A Spectrophotometer model LabScan® XE by HunterLab was used to measure color differences during time using coordinates L, a, b, E and ΔE (DeltaE) in Hunter color space according to ASTM D2244-16 Standard Practice for Calculation of Color Tolerances and Color Differences from Instrumentally Measured Color Coordinates.

### EXAMPLES

The following examples illustrate some aspects of the invention. It is understood that the examples and embodiments described herein are for illustrative purposes only and that various modifications or changes in light thereof may be suggested by one skilled in the art without departing from the scope of the present invention. Accordingly, the invention is not limited by or to the examples. Amounts mentioned in the tables below refer to wt.-% if not indicated to the contrary.

### General film making procedure

The matrix polymer and the additives were dry-blended for 3 minutes in high speed mixer at 600 rpm with the matrix polymer in pellets and 500 ppm of humectant paraffinic oil for pharmaceutical use and then compounded in an extruder type Leistritz Micro 27 twin screw extruder (Size= 27 mm; L/D=40m Max RPM=500; capacity=10-40 Kg/h, feeding: 3 ports (main+ 2 side feeders); 4 loss in weight feeders). Extrusion conditions were as follows: rotation speed of 180 rpm, melt temperature: 160 °C on first screw diameter gradually increased until 200°C on head.

The compounded pellets obtained from extrusion were blown to a film with a Dolci 3 layers Blown film extrusion line (Diameter die: 250 mm, Lip opening: 1,2 mm, Diameter screw(s): 45 - 55 - 45 mm, L/D ratio screw(s): 30D - 30D - 30D) with extrusion temperatures from 170°C (1^{st} zone) to 200°C (die).

These matrix polymers were used:
LDPE = Versalis Riblene® FC 39 F, density 0.924 g/cc (ISO 1183) and Melt Index /D (190 °C/2.16 kg) 0.25 (ISO 1133)
LLDPE = Versalis Flexirene® F 25 U, density 0.918 g/cc (ISO 1183) and Melt Index /D (190 °C/2.16 kg) 0.65 (ISO 1133) and Melt Index /T (190°C/5kg)/ 2.2 and MWD (molecular weight distribution) expressed as MFR ratio T/D (190°C/5kg)/(190°C/2.16kg) (ISO 1133) = 3.4
EVA (14% VA) = Greenflex® FC 45 F, density 0.935 g/cc (ISO 1183) and Melt Index /D (190 °C/2.16 kg) 0.3 (ISO 1133)
EVA (5% VA) = Greenflex® FD 20 F, density 0.924 g/cc (ISO 1183) and Melt Index /D (190 °C/2.16 kg) 0.5 (ISO 1133)
Riblene, Flexirene and Greenflex polymers are all available from Versalis S.p.A., San Donato Milanese, Italy

### Preparation of EXP UV50

EXP UV50 was manufactured by a two step approach. First, a transesterification reaction was carried out between 2,2,6,6-tetramethyl-4-piperidynol and dimethyl-succinate in heptane as solvent. The raw product was purified by solvent removal and removal of residual 2,2,6,6-tetramethyl-4-piperidinol whereby the intermediate product was obtained. EXP UV 50 was obtained by reaction of the intermediate product with excess of n-decane in the presence of tert-butyl hydroperoxide. Excess decane was removed by distillation.

EXP UV 50 has about a. 88 wt.-% of di-(1-isodecyloxy-2,2,6,6-tetramethylpyperidin-4-yl)succinate, m.w. = 710 g/mol, (CAS 1883807-47-3); b. 11.6 wt.-% of "dimer", m.w. 1278 g/mol; and c. 1.1 wt.-% of "trimer", m.w. = 1847 g/mol. The piperidine content of EXP UV 50 was 40.0 wt.%, with respect to the total weight of the composition. The viscosity (LV4, 12 rpm) was 20'000 mPas at 20 °C and with LV2 at 12 rpm at 1100 mPas at 50 °C.

### Preparation of EXP UV55

EXP UV55 was manufactured by a two step approach. First, a transesterification between reaction was carried out between 2,2,6,6-tetramethyl-4-piperidynol and dimethyl-sebacate in heptane as solvent. The raw product was purified by solvent removal and removal of residual 2,2,6,6-tetramethyl-4-piperidinol whereby the intermediate product was obtained. EXP UV 55 was obtained by reaction of the intermediate product with excess of n-decane, which also served as solvent in second step in the presence of tert-butyl hydroperoxide. Excess decane was removed by distillation.

EXP UV 55 has about a. 17.9 wt.-% of di-(1-isodecyloxy-2,2,6,6-tetramethylpyperidin-4-yl)sebacate, m.w. = 793 g/mol; b. 38.8 wt.-% of "dimer", m.w. 1444 g/mol; c. 24.5 wt-% of "trimer", m.w. 2095 g/mol; and d. 14.9 wt.-% of tetramer, m.w. = 2746 g/mol. The piperidine content of EXP UV 55 was ca. 38% in average wt.%, with respect to the total weight of the composition. The viscosity (LV4, 12 rpm) was 62'000 mPas at 20 °C, and with LV3, 30 rpm at 2750 mPas at 50 °C.

### 1. Degradation of polymer films (for use as greenhouse coverage) during weathering and pesticide simulation treatment

A greenhouse film, 160 micron thick, having 3 co-extruded layers: LLDPE/LDPE/LLDPE (in a thickness ratio 1/2/1) using materials, additive compounding and film extrusion conditions previously described.

Samples of this film were subjected to weathering (WOM) as described in the test method above. After each 15 days, the samples were immerse in 0.2M H₂SO₃ for 24 hrs to simulate acid Sulphur pesticide treatment.

The carbonyl Index was measured after different times in WOM.

| Table 1: Carbonyl Index (at 1720 cm⁻¹) | | | |
|---|---|---|---|
| example | 1a | 1b | 1c |
| hours WOM | Cynergy Solutions® A430 at 1.4% | Tinuvin® NOR™ 371 at 0.8% + UVA 81 at 0.3% | EXP UV 50 at 0.8% + UVA 81 at 0.3% |
| 0 | 0 | 0 | 0 |
| 2544 | 0,005 | 0 | 0 |
| 3456 | 0,040 | 0,015 | 0,005 |
| 4008 | 0,080 | 0,035 | 0,028 |
| 6000 | 0,30 | 0,19 | 0,17 |

### Materials:

Cynergy Solutions® A430, available from Cytec Solvay Group;
Tinuvin® NOR™ 371, available from BASF SE..
UVA 81 = Chimassorb 81, available from BASF SE.
EXP UV 50 is a UV stabilizer composition according to the invention consisting of a. 88 wt.-% of di-(1-isodecyloxy-2,2,6,6-tetramethylpyperidin-4-yl)succinate, m.w. = 710 g/mol, (CAS 1883807-47-3); b. 11.6 wt.-% of "dimer", m.w. 1278 g/mol; and 1.1 wt.-% of "trimer", m.w. = 1847 g/mol. The piperidine content of this composition was 40.0 wt.%, with respect to the total weight of the composition.

It was observed that example 1c outperforms examples 1a and 1b. Even after long term exposure (250 days = 6000 machine hours), the carbonyl index of example 1c is lower than for the examples 1a and 1b.

### 2. Mechanical properties of mulch films during weathering

Mechanicals properties of mulch films (thickness: 30 µm) were tested during weathering tests. After each 15 days, the samples were immerse in 0.2M H₂SO₃ for 24 hrs to simulate acid Sulphur pesticide treatment. Mulch film is a co-extruded 3 layered A/B/C film with A facing the atmosphere/sun and C facing the soil, with A: LDPE; B: EVA (VA 14%); C: EVA (VA 5%). In sample 2.1 Tinuvin NOR 371 was added as stabilizer; In sample 2.2, the stabilizer was EXP UV50, both at 1.0wt-%, the wt.-% with respect to the total weight of the film.

| Table 2: Tensile strength in % on mulch film d= 30 µm | | | | | | |
|---|---|---|---|---|---|---|
| WOM hrs/Example | 0 | 300 | 650 | 900 | 1200 | 1800 |
| 2.1 NOR 371 | 100 | 94 | 89 | 84 | 74 | 43 |
| 2.2 EXP UV 50 | 100 | 100 | 93 | 86 | 76 | 52 |

| Table 3: Elongation at break in % on mulch film d= 30 µm | | | | | | |
|---|---|---|---|---|---|---|
| WOM hrs/Example | 0 | 300 | 650 | 900 | 1200 | 1800 |
| 2.1 NOR 371 | 100 | 100 | 86 | 69 | 37 | 5 |
| 2.2 EXP UV 50 | 100 | 100 | 92 | 81 | 49 | 15 |

The mechanical properties of mulch film having EXP UV 50 as stabilizer outperform clearly a mulch film with Tinuvin NOR 371 (sample representing the state of the art).

### 3. Greenhouse film

Mechanicals properties of greenhouse films were tested during weathering tests. After each 15 days, the samples were immerse in 0.2M H₂SO₃ for 24 hrs to simulate acid Sulphur pesticide treatment. Greenhouse 180 µm film is a co-extruded 3 layered film of type A/B/C, wherein A is facing the outer side and C is facing the interior of the greenhouse, with A: LLDPE/LDPE blend; B: EVA (VA 14%); C: EVA (VA 5%). In sample 3.1 Tinuvin NOR 371 was added as stabilizer; In sample 3.2, the stabilizer was EXP UV50, both at 1.0wt.-%, the wt.-% with respect to the total weight of the film.

| Table 4: Tensile strength in % on greenhouse film d= 180 µm | | | | | | |
|---|---|---|---|---|---|---|
| WOM hrs/Example | 0 | 800 | 1500 | 2500 | 3500 | 4500 |
| 3.1 NOR 371 | 100 | 94 | 86 | 82 | 64 | 43 |
| 3.2 EXP UV 50 | 100 | 96 | 91 | 86 | 77 | 53 |

| Table 5: Elongation at break in % on greenhouse film d= 180 µm | | | | | | |
|---|---|---|---|---|---|---|
| WOM hrs/Example | 0 | 800 | 1500 | 2500 | 3500 | 4500 |
| 3.1 NOR 371 | 100 | 91 | 82 | 63 | 46 | 6 |
| 3.2 EXP UV 50 | 100 | 96 | 88 | 70 | 52 | 10 |

The mechanical properties of greenhouse film having EXP UV 50 as stabilizer outperform clearly a similar greenhouse film with Tinuvin NOR 371.

### 4. Flame retardancy and UV stability

Further experiments were conducted focusing on synergistic effects when employing the UV stabilizer EXP UV 50, with further UV synergistic stabilizers and/or flame retardants, see Table 6.

**Table 6. Flame Retardancy and UV Stability**

| | PP | APP | Sabostab | | Tinuvin | Sabostab | | Pigment | DIN 4102-1 | | | UL 92 VB | WOM h (Chalking) | Comments |
|---|---|---|---|---|---|---|---|---|---|---|---|---|---|---|
| Formulation | Moplen HP400R MRF 25 | Exolit AP 422 | PS 68 | EXP UV 50 | NOR 371 | UV 37 | UV 119 | TiONA 595 | residual length, mm | Class | LOI % (ISO 4589) | Class | | |
| 1 | 100 | | | | | | | | 155 | B2 | 18 | Fail | 900 | No additive |
| 2 | 97.2 | | 0.3 | | 2.5 | | | | 160 | B1 | 23.5 | V2 | 5100 | market Reference |
| 3 | 97.2 | | 0.3 | 2.5 | | | | | 165 | B1 | 24 | V2 | 6200 | EXP UV 50 |
| 4 | 79.7 | 20 | 0.3 | | | | | | 175 | B1 | 26 | V2 | 500 | FR reference, no UV |
| 5 | 93 | 6 | 0.3 | | 0.7 | | | | 165 | B1 | 25.5 | V2 | 4000 | FR +UV mrk Reference |
| 6 | 93 | 6 | 0.3 | 0.7 | | | | | 170 | B1 | 26 | V2 | 4500 | FR + EXP UV 50 |
| 7 | 92.3 | 6 | 0.3 | 0.7 | | 0.4 | | 0.3 | 165 | B1 | 26 | V2 | 9000 | FR + EXP UV 50 + benzoate |
| 8 | 92 | 6 | 0.3 | 0.7 | | | 0.7 | 0.3 | 160 | B1 | 25.5 | V2 | 7000 | FR + EXP UV 50 + HALS |
| 9 | 93.3 | 6 | | | | 0.4 | | 0.3 | 160 | B2 | 21 | Fail | 1500 | FR + benzoate |
| 10 | 93 | 6 | | | | | 0.7 | 0.3 | 155 | B2 | 20 | Fail | 4000 | FR + HALS |

**Moplen HP400R** is a polypropylene homopolymer (MFR (230, 2.16)=25g/10 min., Tensile Mod (ISO 527-1) = 1350 MPa, Vicat-T (A50) = 154 °C available from Lyondell Basell.
**Exolit AP 422** is a fine-particle ammonium polyphosphate flame retardant, available from Clariant SE, Frankfurt, Germany.
**Sabostab PS 68** is Tris(2,4-ditertbutylphenyl)phosphite in powder form, CAS ID no. 31570-04-4, available from SABO S.p.A., Levate, Italy.
**Sabostab UV 37** is Hexadecyl 3,5-bis-tert-butyl-4-hydroxybenzoate in powder form, CAS ID no. 67845-93-6, available from SABO S.p.A., Levate, Italy.
**Sabostab UV 119** is based on CAS ID no. 106990-43-6 (main component), available from SABO S.p.A., Levate, Italy.
**TiONA 595** is a TiO₂ pigment, produced by Cristal Global, headquartered in Jeddah, Saudia Arabia.

The above table shows that a sample with EXP UV 50 always outperforms those of similar composition but with no EXP UV 50, with regard to both, flame retardant and UV stabilizing properties. Samples 2-8 all qualify for "B1" according to DIN 4102-1 and "V2" pursuant to UL 92 VB, respectively. Comparison of sample #3 with #2 reveals that #3 has a higher oxygen index and higher WOM time than sample #2. Moreover, when looking at combinations of flame retardant with UV stabilizer, sample #6 outperforms sample #5 in both, oxygen index and WOM time. When using combinations of EXP UV 50 with further UV stabilizers, #7 and #8, here UV 37 (benzoate) and UV 119 (hindered amine, HALS), synergistic effects expressed as highly increased WOM time (higher resistance to weathering) are observed, compared with sample #6 having only EXP UV 50, or compared to samples #9 and #10 where only benzoate or HALS are used as UV stabilizers.

### 5. Coating test

A solid varnish basecoat based on acrylic resin lacquer and colored with a mixture of pigments was produced. The weights and compounds are given in Table 7 below.

The basecoat was sprayed as a dry film with thickness of ca 20 µm onto 5 cm x 10 cm steel plaques. The coated plaques were cured in an oven at 120°C for 30 minutes. Then, the coated plates were aged in Weather-Ometer by ATLAS (WOM) under ISO 4892-2:2013, method A Cycle no. 1 (see test methods).

Periodically, the plaques were removed from the WOM and Gloss at 20° (ASTM D523-14) and ΔE (DeltaE) color coordinate (ASTM D2244-16) was measured. The results are summarized in Table 7.

Gloss decrease or progressive color variation (usually yellowing) are typical indications pointing to photo-oxidation of a surface, and anticipates the visible Chalking or superficial micro-crazing of the material.

**Table 7 - UV stabilization of Coating**

| | | Formulations by per cent (%) | | |
|---|---|---|---|---|
| | | 1 | 2 | 3 |
| Acrylic Base coat | | 97.2 | 96.2 | 96.2 |
| Pigment white TiO₂ (Kronos 2160) | | 2.5 | 2.5 | 2.5 |
| Pigment Blue 15:3 | | 0.3 | 0.3 | 0.3 |
| EXP UV 50 | | - | 1 | - |
| Tinuvin NOR™ 371 | | - | - | 1 |
| Total % | | 100 | 100 | 100 |

| WOM according to ISO 4892-2 | | | | |
|---|---|---|---|---|
| Gloss 20° | 0 h | 74 | 76 | 75 |
| ASTM D523 | 500 h | 65 | 71 | 70 |
| | 1000 h | 40 | 68 | 65 |
| | 1500 h | 20 | 64 | 61 |
| | 3000 h | 5 | 58 | 52 |
| | 4500 h | 0 | 51 | 45 |
| | 6000 h | - | 42 | 30 |
| | 7500 h | - | 38 | 20 |
| Delta E ΔE ASTM D2244 | 0 h | 0 | 0 | 0 |
| | 500 h | 1 | 0.2 | 0.4 |
| | 1000 h | 3 | 0.5 | 0.7 |
| | 1500 h | 5 | 0.8 | 1.1 |
| | 3000 h | 15 | 1 | 1.5 |
| | 4500 h | 22 | 1.8 | 2.3 |
| | 6000 h | 30 | 2.5 | 3.6 |
| | 7500 h | 40 | 3 | 5 |

The **acrylic base coat** is DUXONE® DX by Axalta Coating Systems, Basel, Switzerland **Pigment White TiO₂** is Kronos 2160, available from Kronos B.V., Rotterdam, Belgium **Pigment Blue 15:3** is PRCO 1004 G PIGMENT BLUE 15:3, available from Prasad International Ltd., Ahmedabad, Gujarat, India
**Exp UV 50** is a composition of amines according to the invention, avalaible from SABO S.p.A., Levate, Italy
**Tinuvin NOR 371** is available from BASF S.E., Ludwigshafen, Germany.

The examples demonstrate that a coating with EXP UV 50 stabilizer outperforms coatings with other UV stabilizers, e.g. Tinuvin NOR 371 Examples with EXP UV 50 reach a longer resistance of the coating to the light ageing having a better gloss retention and less color variation.

## Claims

1. A composition at least comprising:
A) a first N-alkoxy amine in a first amount;
B) 3 wt.-% or more of a second N-alkoxy amine structurally different form the first N-alkoxy amine; and
a balance to 100 of further constituents;
wherein the amount of the first N-alkoxy amine is higher than the amount of the second N-alkoxy amine; w
herein the molecular weight of the first N-alkoxy amine is less than the molecular weight of the second N-alkoxy amine;
wherein the composition has a viscosity in the range from 15'000 to 70'000 mPa*s at 20 °C; and
wherein the molecular weight of the first N-alkoxy amine is in the range from 500 to 1600 g/mol; and
wherein the molecular weight of the second N-alkoxy amine is in the range from 1000 to 3000 g/mol.

2. The composition according to the claim 1, wherein the second N-alkoxy amine is a polymer which comprises a first and a further repeating unit, wherein the first repeating unit is obtainable from an alkanediol.

3. The composition of claim 2, wherein the further repeating unit is obtainable from a N,N'-bis(2,2,6,6-tetramethyl-4-piperidyl)ester of a dicarboxylic acid.

4. The composition according to any one of claims 2 to 3, wherein the polymer comprises from 2 to 5 of the further repeating units.

5. The composition according to any one of the preceding claims, wherein the composition has a piperidyl content in the range of from 30 to 60 wt.-% based on the total weight of the composition.

6. The composition according to any one of the preceding claims,
wherein the composition has a viscosity in the range from 15'000 to 30'000 mPa*s at 20 °C; and
wherein the molecular weight of the first N-alkoxy amine is in the range from 500 to 900 g/mol; and
wherein the molecular weight of the second N-alkoxy amine is in the range from 1000 to 1800 g/mol.

7. The composition according to any one of claims 1 to 5,
wherein the composition has a viscosity in the range from 50'000 to 70'000 mPa*s at 20 °C; and
wherein the molecular weight of the first N-alkoxy amine is in the range from 1200 to 1700 g/mol; and
wherein the molecular weight of the second N-alkoxy amine is in the range from 1800 to 2500 g/mol.

8. The composition according to any one of the preceding claims, wherein the composition comprises
C) 0.5 wt.-% or more of a further N-alkoxy amine structurally different from the first and the second wherein the molecular weight of the further N-alkoxy amine is higher than the molecular weight of the second N-alkoxy amine.

9. The composition according to claim 8, wherein the molecular weight of the further N-alkoxy amine is in the range from 1500 to 4000 g/mol.

10. The composition according to any one of claims 8 or 9, wherein the further N-alkoxy amine is a polymer of an alkanediol and a N,N'-bis[1-(alkoxy)-2,2,6,6-tetramethyl-4-piperidyl] ester of a dicarboxylic acid.

11. The composition according to any one of the preceding claims, wherein the composition comprises at least one further constituent selected from the group consisting of a phosphite, a phosphonite, a HALS, and/or a phenolic, or a combination of two or more thereof.

12. The composition according to claim 11, wherein the at least one further constituent is selected from the group consisting of benzoic acid, a benzoate, such as Hexadecyl-3,5-bistert-butyl-4-hydroxybenzoate or 2,4-di-tert-butylphenyl 3,5-di-tert-butyl-4-hydroxybenzoate, or a combination of two or more thereof.

13. A process of manufacturing an article comprising a composition according to any one of the preceding claims, wherein the process comprises at least these steps:
(I) Providing a matrix polymer;
(II) Adding the composition;
(III) Processing the matrix polymer and the composition.

14. An article comprising at least a matrix polymer and a composition according to any one of the claims 1 to 12, or an article obtainable by the process of claim 13.

15. The article of claim 14, wherein the article comprises at least a matrix polymer selected from the group consisting of a polyolefin, a thermoplastic, a thermoplastic olefin compound, or a combination of two or more matrix polymers in the same or in different groups thereof.

16. The article according to any one of claims 14 and 15, wherein the article is a foil or a film.

17. A greenhouse comprising at least one article according to anyone of claims 14 to 16.

18. A process for producing plants comprising at least the following steps:
i) Planting seeds or seedlings in a culture medium;
ii) At least partially covering the planted seeds or seedlings with the article of any one of claims 14 to 16.

19. A use of a composition according to anyone of claims 1 to 12 as a UV stabilizer and/or as a flame retardant for articles comprising at least a matrix polymer.

20. An article comprising at least a coating which coating comprises a composition according to any one of the claims 1 to 12.
